# EUROPEAN PATENT APPLICATION

(11) **EP 4 797 495 A1**
(43) Date of publication of application: **26.08.2026**
(21) Application number: 26160105.8
(22) Date of filing: 23.02.2026
(51) Int. Cl.: H02J 9/06

(54) **UNINTERRUPTIBLE POWER SUPPLY SYSTEM**

(30) Priority: 25.02.2025 CN 202510214970
(71) Applicant: HUAWEI TECHNOLOGIES CO., LTD., Shenzhen, Guangdong 518129 (CN)
(72) Inventor: SUN, Lei, Shenzhen, 518129 (CN); SHU, Zhou, Shenzhen, 518129 (CN); XI, Yong, Shenzhen, 518129 (CN)
(74) Representative: Gill Jennings & Every LLP

(57) **Abstract**

This application provides an uninterruptible power supply system. To enhance adaptability of the uninterruptible power supply system in an ECO mode to different operating conditions, at least one of the following conditions is adjusted: a rising edge driven by a bypass bidirectional switch, that is, a first bidirectional switch, is advanced by a specified angle before a first alternating-current voltage that is input to an input end of a bypass passing through a zero potential, so that adaptability to a load with a leading PF and adaptability to PF fluctuation of a load can be effectively improved; a rising edge driven by an inverter bidirectional switch, that is, a second bidirectional switch, is delayed beyond a phase of the first alternating-current voltage by a specified angle, so that backfeed of an output voltage of the bypass to a main due to a phase-locked leading deviation can be effectively avoided; and a falling edge driven by the inverter bidirectional switch, that is, the second bidirectional switch, is advanced ahead of a phase of the first alternating-current voltage by a specified angle, so that backfeed of an output voltage of the bypass to the main due to a phase-locked lagging deviation or drop distortion of a voltage of the bypass can be effectively avoided.

## Description

### TECHNICAL FIELD

This application relates to the field of power electronic technologies, and in particular, to an uninterruptible power supply system.

### BACKGROUND

An uninterruptible power supply (uninterruptible power supply, UPS) system is a power supply device that can supply power to important loads uninterruptedly during power interruptions or failures. The UPS system includes a main and a bypass. Uninterrupted power outputting can be implemented through coordinated switching between the main and the bypass.

The UPS system usually operates in two operating modes: a double-conversion mode and an economy control operation (economy control operation, ECO) mode. In the double-conversion mode, the main supplies power, and the bypass is in hot standby. The main first converts an alternating-current input voltage into a direct-current voltage through a first-stage converter, and then converts the direct-current voltage into an alternating-current output voltage through a second-stage converter, to supply power to loads. In the main, due to direct-current bus isolation between an input and an output, output power quality is high. However, two-stage conversion: an alternating current to a direct current and a direct current to an alternating current, is required, resulting in a large system loss (efficiency is usually 97%). In the ECO mode, the bypass supplies power, and the main is in hot standby or performs low-power harmonic compensation, resulting in high system efficiency (up to 99%). Therefore, the ECO mode becomes an important choice for customers.

The ECO mode requires the UPS system to switch quickly to the main to supply power in the case of a power interruption or failure in the bypass, to ensure uninterrupted outputting. Currently, to implement uninterrupted switching between the main and the bypass in the ECO mode, a bidirectional switch is provided on an output side of each of the bypass and the main. When the main is in hot standby, an amplitude of an alternating-current voltage output by the main may be set to be lower than an amplitude of an alternating-current voltage output by the bypass by a specific value. In this case, when power supply is normal in the bypass, the bidirectional switch provided on the main withstands a reverse voltage and is then turned off, to ensure normal outputting of the bypass. When power fails in the bypass, the bidirectional switch provided on the main is naturally turned on, the bidirectional switch provided on the bypass withstands a reverse voltage and is then turned off, and the main performs outputting normally. In this way, switching between the bypass and the main is implemented.

The foregoing technical solution has the following drawbacks: The technical solution is applicable only to particular loads, and the bidirectional switches on the main and the bypass are driven in a fully synchronized manner to implement completely uninterrupted outputting during the switching between the bypass and the main, leading to poor adaptability to different operating conditions in the case of steady outputting of the UPS system. Specific problems are as follows: 1. When the UPS system supplies power to a capacitive load with a leading power factor (power factor, PF), and when the PF of the load fluctuates, an output voltage of the UPS system is distorted. 2. If there is a phase deviation between an output voltage of the bypass and an output voltage of the main in the UPS system, the output voltage of the bypass in the UPS system is backfed to the main. 3. When an output voltage of the bypass in the UPS system experiences drop distortion near a voltage zero-crossing point, the output voltage of the bypass in the UPS system is backfed to the main. In conclusion, the current technical solution has poor adaptability to different operating conditions, including a capacitive load, a phase deviation between an output voltage of the bypass and an output voltage of the main, drop distortion of a voltage of the bypass occurring near a voltage zero-crossing point, and the like.

### SUMMARY

Embodiments of this application provide an uninterruptible power supply system, to improve adaptability to different operating conditions in an ECO mode, to enhance reliability of the system.

To achieve the foregoing objective, the following technical solutions are used in this application.

A first aspect of embodiments of this application provides an uninterruptible power supply system that may specifically include a first input end, a second input end, an output end, a bypass, a main, and a drive unit. The first input end is configured to receive a first alternating-current voltage, the second input end is configured to receive a second alternating-current voltage, and the output end is configured to connect to a load. During specific application, the first input end and the second input end are connected to an electric power system. The electric power system may be a power plant, a transformer station, or the like. The first alternating-current voltage and the second alternating-current voltage may be a same alternating-current voltage, or the first alternating-current voltage and the second alternating-current voltage may be different alternating-current voltages. The load may be electrical equipment in a factory, or may be a communication device, for example, a server in a data center. During normal operation of the electric power system, one part of electric power supplied by the electric power system is transmitted to the load through the uninterruptible power supply system, and the other part of the electric power supplied by the electric power system is stored in the uninterruptible power supply system. During abnormal operation of the electric power system, the electric power system cannot transmit electric power to the load. In this case, the electric power stored in the uninterruptible power supply system is transmitted to the load, for the load to obtain required electric power from the uninterruptible power supply system.

The bypass includes a bypass bidirectional switch, that is, a first bidirectional switch, the first bidirectional switch is connected between the first input end and the output end, and the first bidirectional switch is configured to control the first input end and the output end to be connected or disconnected. The first bidirectional switch includes a first thyristor and a second thyristor that are connected in parallel. An anode of the first thyristor is connected to the first input end, a cathode of the first thyristor is connected to the output end, an anode of the second thyristor is connected to the output end, and a cathode of the second thyristor is connected to the first input end. In an ECO mode, the drive unit applies alternating turn-on drive signals to the first thyristor and the second thyristor, for the first input end and the output end to be connected. In other words, in the ECO mode, the turn-on drive signal of the first thyristor and the turn-on drive signal of the second thyristor do not overlap. Specifically, when the turn-on drive signal is applied to the first thyristor, a turn-off drive signal is applied to the second thyristor, or when the turn-on drive signal is applied to the second thyristor, a turn-off drive signal is applied to the first thyristor. In a double-conversion mode, the drive unit controls the first thyristor and the second thyristor to be turned off, for the first input end and the output end to be disconnected.

The uninterruptible power supply system may include one or more mains. The main includes a power conversion circuit and an inverter bidirectional switch, that is, a second bidirectional switch, an input end of the power conversion circuit is connected to the second input end, an output end of the power conversion circuit is connected to the second bidirectional switch, the power conversion circuit is configured to perform power conversion on the second alternating-current voltage and then output a third alternating-current voltage, and an amplitude of the third alternating-current voltage is less than an amplitude of the first alternating-current voltage. For example, the first alternating-current voltage is 220 V, and the third alternating-current voltage may be controlled to 205 V. When the first alternating-current voltage input to the first input end is normal, the second bidirectional switch withstands a reverse voltage and is then turned off, the first bidirectional switch withstands a forward voltage and is then turned on, and the first alternating-current voltage input to the first input end is transmitted to the output end. When the first alternating-current voltage input to the first input end is abnormal, for example, in an undervoltage or power failure case, the first bidirectional switch withstands a reverse voltage and is then turned off, the second bidirectional switch withstands a forward voltage and is then turned on, and the third alternating-current voltage output by the power conversion circuit is transmitted to the output end. The power conversion circuit specifically includes a rectifier circuit, an inverter circuit, and a charge and discharge circuit. The charge and discharge circuit is configured to connect to a battery group. When the second alternating-current voltage provided by the second input end is normal, the second alternating-current voltage is converted and regulated by the rectifier circuit and the inverter circuit and then provided to the second bidirectional switch, and may also pass through the charge and discharge circuit to charge the battery group. When the second alternating-current voltage of the second input end is interrupted (for example, an accidental power failure), direct-current electric power of the battery group is converted and regulated by the charge and discharge circuit and the inverter circuit and then provided to the second bidirectional switch. The second bidirectional switch is connected between the output end of the power conversion circuit and the output end, and the second bidirectional switch is configured to control the output end of the power conversion circuit and the output end to be connected or disconnected. The second bidirectional switch includes a third thyristor and a fourth thyristor that are connected in parallel, an anode of the third thyristor is connected to the output end of the power conversion circuit, a cathode of the third thyristor is connected to the output end, an anode of the fourth thyristor is connected to the output end, and a cathode of the fourth thyristor is connected to the output end of the power conversion circuit. The drive unit applies alternating turn-on drive signals to the third thyristor and the fourth thyristor. In other words, the turn-on drive signal of the third thyristor and the turn-on drive signal of the fourth thyristor do not overlap. Specifically, when the turn-on drive signal is applied to the third thyristor, a turn-off drive signal is applied to the fourth thyristor, or when the turn-on drive signal is applied to the fourth thyristor, a turn-off drive signal is applied to the third thyristor.

The uninterruptible power supply system may further include a phase-locking unit, the phase-locking unit is configured to detect phase information of the first alternating-current voltage input to the first input end, and the phase information is also transferred to the inverter circuit and the drive unit. The inverter circuit outputs and transfers, based on the phase information, the third alternating-current voltage that is in a same phase as the first alternating-current voltage to the second bidirectional switch. The drive unit performs drive control separately on the first bidirectional switch and the second bidirectional switch based on the phase information.

A manner of driving the first bidirectional switch is as follows: In a period of a phase 0° moment of the first alternating-current voltage to a phase 180° moment of the first alternating-current voltage input to the first input end, a turn-on drive signal is applied to the first thyristor, and a turn-off drive signal is applied to the second thyristor; and in a period of the phase 180° moment of the first alternating-current voltage to a phase 360° moment of the first alternating-current voltage input to the first input end, a turn-off drive signal is applied to the first thyristor, and a turn-on drive signal is applied to the second thyristor. A manner of driving the second bidirectional switch is as follows: In a period of a phase 0° moment of the first alternating-current voltage to a phase 180° moment of the first alternating-current voltage input to the first input end, a turn-on drive signal is applied to the third thyristor, and a turn-off drive signal is applied to the fourth thyristor; and in a period of the phase 180° moment of the first alternating-current voltage to a phase 360° moment of the first alternating-current voltage input to the first input end, a turn-off drive signal is applied to the third thyristor, and a turn-on drive signal is applied to the fourth thyristor. In this application, there may be a plurality of manners of setting a phase moment of the first alternating-current voltage. For example, the phase 0° moment of the first alternating-current voltage is the first moment, detected by the phase-locking unit, at which the first alternating-current voltage passes through a zero potential from a negative voltage to a positive voltage in a voltage cycle, and the voltage cycle starts from this moment; the phase 180° moment of the first alternating-current voltage is a moment, detected by the phase-locking unit, at which the first alternating-current voltage passes through a zero potential from a positive voltage to a negative voltage in the voltage cycle; and the phase 360° moment of the first alternating-current voltage is the second moment, detected by the phase-locking unit, at which the first alternating-current voltage passes through a zero potential from a negative voltage to a positive voltage in the voltage cycle.

In this application, the drive unit adjusts a rising edge moment of the turn-on drive signal and a falling edge moment of the turn-off drive signal, for example, the rising edge moment advances ahead of or lags behind the phase 0° moment or the phase 180° moment of the first alternating-current voltage, and the falling edge moment advances ahead of or lags behind the phase 180° moment or the phase 360° moment of the first alternating-current voltage, to adapt to different operating conditions. Specifically, the drive unit is configured to control the rising edge moment and the falling edge moment to meet at least one of the following conditions.

In this application, to improve adaptability of the uninterruptible power supply system to different loads, especially to improve adaptability to a connected capacitive load with a leading PF and adaptability to PF fluctuation of a load, the drive unit may adjust rising edges of the first thyristor and the second thyristor to advance ahead of zero-potential moments of the first alternating-current voltage by a specific phase angle. Specifically, the drive unit may adjust the rising edge of the first thyristor to advance ahead of a first zero-potential moment of the first alternating-current voltage by an angle θbps1, for the rising edge moment of the first thyristor to be earlier than the first zero-potential moment of the first alternating-current voltage, where the first zero-potential moment of the first alternating-current voltage is a moment at which the first alternating-current voltage passes through a zero potential from a negative voltage to a positive voltage. The drive unit may adjust the rising edge of the second thyristor to advance ahead of a second zero-potential moment of the first alternating-current voltage by an angle θbps2, for the rising edge moment of the second thyristor to be earlier than the second zero-potential moment of the first alternating-current voltage, where the second zero-potential moment of the first alternating-current voltage is a moment at which the first alternating-current voltage passes through a zero potential from a positive voltage to a negative voltage. Specifically, advance angles of the rising edges of the first thyristor and the second thyristor may be selected based on a requirement of a load with a leading PF and PF fluctuation of a load.

In this application, due to a phase-locked leading deviation, that is, a phase of the third alternating-current voltage leads a phase of the first alternating-current voltage, near a voltage zero-crossing point of the first alternating-current voltage, both the first thyristor and the fourth thyristor may be turned on simultaneously, and both the second thyristor and the third thyristor may be turned on simultaneously, leading to backfeed of an output voltage of the bypass to the main. To avoid this problem, the drive unit may adjust rising edges of the third thyristor and the fourth thyristor to be respectively delayed beyond the phase 0° moment and the phase 180° moment of the first alternating-current voltage by a specific phase angle. After the drive adjustment, application of a turn-on drive signal to the third thyristor due to a phase-locked leading deviation in a time period in which an instantaneous value of the third alternating-current voltage is greater than an instantaneous value of the first alternating-current voltage is avoided, and application of a turn-on drive signal to the fourth thyristor due to a phase-locked leading deviation in a time period in which an instantaneous value of the third alternating-current voltage is less than an instantaneous value of the first alternating-current voltage is avoided, thereby avoiding backfeed of an output voltage of the bypass to the main due to simultaneous turn-on of the first bidirectional switch and the second bidirectional switch. Specifically, the drive unit may adjust the rising edge of the third thyristor to be delayed beyond the phase 0° moment of the first alternating-current voltage by an angle θinv1, for the rising edge moment of the third thyristor to be later than the phase 0° moment of the first alternating-current voltage. The drive unit may adjust the rising edge of the fourth thyristor to be delayed beyond the phase 180° moment of the first alternating-current voltage by an angle θinv2, for the rising edge moment of the fourth thyristor to be later than the phase 180° moment of the first alternating-current voltage. Specifically, delay angles of the rising edges of the third thyristor and the fourth thyristor may be selected based on a phase-locked leading deviation.

In this application, due to a phase-locked lagging deviation, that is, a phase of the third alternating-current voltage lags behind a phase of the first alternating-current voltage, and drop distortion of the first alternating-current voltage before the first zero-potential moment or the second zero-potential moment, the second bidirectional switch is turned on at an unexpected moment, leading to backfeed of an output voltage of the bypass to the main. To avoid this problem, the drive unit may adjust falling edges of the third thyristor and the fourth thyristor to advance respectively ahead of the phase 180° moment and the phase 360° moment of the first alternating-current voltage by a specific phase angle. After the drive adjustment, application of a turn-on drive signal to the third thyristor due to a phase-locked lagging deviation in a time period in which an instantaneous value of the third alternating-current voltage is greater than an instantaneous value of the first alternating-current voltage is avoided, and application of a turn-on drive signal to the fourth thyristor due to a phase-locked lagging deviation in a time period in which an instantaneous value of the third alternating-current voltage is less than an instantaneous value of the first alternating-current voltage is avoided, thereby avoiding simultaneous turn-on of the first bidirectional switch and the second bidirectional switch. This can adapt to the operating condition of a phase-locked lagging deviation or drop distortion of an output voltage of the bypass occurring near a voltage zero-crossing point. Specifically, the drive unit may adjust the falling edge of the third thyristor to advance ahead of the phase 180° moment of the first alternating-current voltage by an angle θinv3, for the falling edge moment of the third thyristor to be earlier than the phase 180° moment of the first alternating-current voltage. The drive unit may adjust the falling edge of the fourth thyristor to advance ahead of the phase 360° moment of the first alternating-current voltage by an angle θinv4, for the falling edge moment of the fourth thyristor to be earlier than the phase 360° moment of the first alternating-current voltage. Specifically, advance angles of the falling edges of the third thyristor and the fourth thyristor may be selected by balancing a phase-locked lagging deviation and drop distortion of the first alternating-current voltage.

In this application, any one or more of the foregoing adjustments may be performed based on an operating condition of the uninterruptible power supply system. For example, only the rising edges of the first thyristor and the second thyristor may be adjusted to advance respectively ahead of the first zero-potential moment and the second zero-potential moment of the first alternating-current voltage by a specific phase angle. Alternatively, only the rising edges of the third thyristor and the fourth thyristor may be adjusted to be respectively delayed beyond the phase 0° moment and the phase 180° moment of the first alternating-current voltage by a specific phase angle. Alternatively, only the falling edges of the third thyristor and the fourth thyristor may be adjusted to advance respectively ahead of the phase 180° moment and the phase 360° moment of the first alternating-current voltage by a specific phase angle.

In some embodiments of this application, the output end of the uninterruptible power supply system is connected to a capacitive load. When the output end is connected to the capacitive load, a current phase of the output end advances ahead of a voltage phase, so that a moment at which an output current of the bypass is a zero current advances ahead of a moment at which the first alternating-current voltage is a zero potential. To ensure an uninterrupted voltage at the output end, the drive unit needs to control the rising edge moment of the first thyristor to be earlier than or equal to a first zero-current moment of a current at the output end, that is, an output current of the bypass, where the first zero-current moment of the current at the output end, that is, the output current of the bypass, is a moment at which the current at the output end, that is, the output current of the bypass passes through a zero current from a negative current to a positive current. Before the first zero-current moment of the output current of the bypass, a turn-on drive has been applied to the first thyristor. Therefore, the voltage at the output end is uninterrupted, so that adaptability of the uninterruptible power supply system to loads is enhanced. Similarly, the drive unit needs to control the rising edge moment of the second thyristor to be earlier than or equal to a second zero-current moment of a current at the output end, that is, an output current of the bypass, where the second zero-current moment of the current at the output end, that is, the output current of the bypass, is a moment at which the current at the output end, that is, the output current of the bypass passes through a zero current from a positive current to a negative current. Before the second zero-current moment of the output current of the bypass, a turn-on drive has been applied to the second thyristor. Therefore, the voltage at the output end is uninterrupted, so that adaptability of the uninterruptible power supply system to loads is enhanced.

In some embodiments of this application, it is assumed that a leading phase difference between the current phase and the voltage phase is a first phase angle, duration by which the rising edge of the first thyristor is earlier than the first zero-potential moment of the first alternating-current voltage is first duration, and duration by which the rising edge of the second thyristor is earlier than the second zero-potential moment of the first alternating-current voltage is second duration. The first duration is positively correlated with the first phase angle, that is, a larger first phase angle indicates longer first duration. The second duration is positively correlated with the first phase angle, that is, a larger first phase angle indicates longer second duration.

In some embodiments of this application, to facilitate drive control, the angle θbps1 by which the rising edge of the first thyristor advances ahead of the first zero-potential moment of the first alternating-current voltage may be set to be equal to the first phase angle by which the current phase advances ahead of the voltage phase. In addition, the angle θbps2 by which the rising edge of the second thyristor advances ahead of the second zero-potential moment of the first alternating-current voltage may be set to be equal to the first phase angle by which the current phase advances ahead of the voltage phase. In other words, the angle θbps1 is equal to the angle θbps2. In other words, the first duration by which the rising edge of the first thyristor is earlier than the first zero-potential moment of the first alternating-current voltage is set to be equal to the second duration by which the rising edge of the second thyristor is earlier than the second zero-potential moment of the first alternating-current voltage.

In this embodiment, to ensure that the turn-on drive signal of the first thyristor and the turn-on drive signal of the second thyristor do not overlap, that is, the turn-on drive signals are not applied to the first thyristor and the second thyristor simultaneously, the drive unit needs to adjust the falling edges of the first thyristor and the second thyristor to advance respectively ahead of the second zero-potential moment and the first zero-potential moment of the first alternating-current voltage by a specific phase angle. Specifically, the drive unit may adjust the falling edge of the first thyristor to advance ahead of the second zero-potential moment of the first alternating-current voltage by an angle θbps3, for the falling edge moment of the first thyristor to be earlier than or equal to the rising edge moment of the second thyristor. The drive unit may adjust the falling edge of the second thyristor to advance ahead of the first zero-potential moment of the first alternating-current voltage by an angle θbps4, for the falling edge moment of the second thyristor to be earlier than or equal to the rising edge moment of the first thyristor.

In this embodiment, to facilitate drive control, the falling edge moment of the first thyristor and the rising edge moment of the second thyristor may be set to a same moment, that is, the angle θbps3 is equal to the angle θbps2, and the falling edge moment of the second thyristor and the rising edge moment of the first thyristor may be set to a same moment, that is, the angle θbps4 is equal to the angle θbps1.

In some other embodiments of this application, there is a leading deviation in the phase information of the first alternating-current voltage input to the first input end, that is, a phase of the third alternating-current voltage advances ahead of a phase of the first alternating-current voltage. As a result, a moment at which the third alternating-current voltage passes through a zero potential advances ahead of a moment at which the first alternating-current voltage passes through a zero potential, and a case occurs: the rising edge of the third thyristor appears in a time period in which an instantaneous value of the third alternating-current voltage is greater than an instantaneous value of the first alternating-current voltage, and the rising edge of the fourth thyristor appears in a time period in which an instantaneous value of the third alternating-current voltage is less than an instantaneous value of the first alternating-current voltage. To avoid backfeed of an output voltage of the bypass to the main due to the foregoing case, the drive unit needs to adjust the rising edge moment of the third thyristor to lag behind or be equal to a first moment, and the rising edge moment of the fourth thyristor to lag behind or be equal to a second moment, where the first moment is a moment at which an instantaneous value of the third alternating-current voltage being greater than an instantaneous value of the first alternating-current voltage changes to an instantaneous value of the third alternating-current voltage being less than an instantaneous value of the first alternating-current voltage, and the second moment is a moment at which an instantaneous value of the third alternating-current voltage being less than an instantaneous value of the first alternating-current voltage changes to an instantaneous value of the third alternating-current voltage being greater than an instantaneous value of the first alternating-current voltage. A turn-on drive signal is applied to the third thyristor only after the instantaneous value of the third alternating-current voltage is less than the instantaneous value of the first alternating-current voltage, and a turn-on drive signal is applied to the fourth thyristor only after the instantaneous value of the third alternating-current voltage is greater than the instantaneous value of the first alternating-current voltage. Therefore, there is no backfeed of an output voltage of the bypass to the main, so that adaptability of the uninterruptible power supply system to a phase-locked leading deviation is enhanced.

In some other embodiments of this application, it is assumed that a leading phase difference between the third alternating-current voltage and the first alternating-current voltage is a second phase angle, duration by which the rising edge of the third thyristor is later than the phase 0° moment of the first alternating-current voltage is third duration, and duration by which the rising edge of the fourth thyristor is later than the phase 180° moment of the first alternating-current voltage is fourth duration. The third duration is positively correlated with the second phase angle, that is, a larger second phase angle indicates longer third duration. The fourth duration is positively correlated with the second phase angle, that is, a larger second phase angle indicates longer fourth duration.

In some other embodiments of this application, to facilitate drive control, the angle θinv1 by which the rising edge of the third thyristor is delayed beyond the phase 0° moment of the first alternating-current voltage may be set to be equal to the second phase angle by which the third alternating-current voltage advances ahead of the first alternating-current voltage. In addition, the angle θinv2 by which the rising edge of the fourth thyristor is delayed beyond the phase 180° moment of the first alternating-current voltage may be set to be equal to the second phase angle by which the third alternating-current voltage advances ahead of the first alternating-current voltage. In other words, the angle θinv1 is equal to the angle θinv2. In other words, the third duration by which the rising edge of the third thyristor lags behind the phase 0° moment of the first alternating-current voltage is set to be equal to the fourth duration by which the rising edge of the fourth thyristor lags behind the phase 180° moment of the first alternating-current voltage.

In still some other embodiments of this application, there is a lagging deviation in the phase information of the first alternating-current voltage input to the first input end, that is, a phase of the third alternating-current voltage lags behind a phase of the first alternating-current voltage. As a result, a moment at which the third alternating-current voltage passes through a zero potential lags behind a moment at which the first alternating-current voltage passes through a zero potential, and a case occurs: the falling edge of the third thyristor appears in a time period in which an instantaneous value of the third alternating-current voltage is greater than an instantaneous value of the first alternating-current voltage, and the falling edge of the fourth thyristor appears in a time period in which an instantaneous value of the third alternating-current voltage is less than an instantaneous value of the first alternating-current voltage. To avoid backfeed of an output voltage of the bypass to the main due to the foregoing case, the drive unit needs to adjust the falling edge moment of the third thyristor to be earlier than or equal to a third moment, and the falling edge moment of the fourth thyristor to be earlier than or equal to a fourth moment, where the third moment is a moment at which an instantaneous value of the third alternating-current voltage being less than an instantaneous value of the first alternating-current voltage changes to an instantaneous value of the third alternating-current voltage being greater than an instantaneous value of the first alternating-current voltage, and the fourth moment is a moment at which an instantaneous value of the third alternating-current voltage being greater than an instantaneous value of the first alternating-current voltage changes to an instantaneous value of the third alternating-current voltage being less than an instantaneous value of the first alternating-current voltage. A turn-off drive signal has been applied to the third thyristor before the instantaneous value of the third alternating-current voltage is greater than the instantaneous value of the first alternating-current voltage, and a turn-off drive signal has been applied to the fourth thyristor before the instantaneous value of the third alternating-current voltage is less than the instantaneous value of the first alternating-current voltage. Therefore, there is no backfeed of an output voltage of the bypass to the main, so that adaptability of the uninterruptible power supply system to a phase-locked lagging deviation is enhanced.

In still some other embodiments of this application, it is assumed that a lagging phase difference between the third alternating-current voltage and the first alternating-current voltage is a third phase angle, duration by which the falling edge of the third thyristor is earlier than the phase 180° moment of the first alternating-current voltage is fifth duration, and duration by which the falling edge of the fourth thyristor is earlier than the phase 360° moment of the first alternating-current voltage is sixth duration. The fifth duration is positively correlated with the third phase angle, that is, a larger third phase angle indicates longer fifth duration. The sixth duration is positively correlated with the third phase angle, that is, a larger third phase angle indicates longer sixth duration.

In still some other embodiments of this application, to facilitate drive control, the angle θinv3 by which the falling edge of the third thyristor advances ahead of the phase 180° moment of the first alternating-current voltage may be set to be equal to the third phase angle by which the third alternating-current voltage lags behind the first alternating-current voltage. In addition, the angle θinv4 by which the falling edge of the fourth thyristor advances ahead of the phase 360° moment of the first alternating-current voltage may be set to be equal to the third phase angle by which the third alternating-current voltage lags behind the first alternating-current voltage. In other words, the angle θinv3 is equal to the angle θinv4. In other words, the fifth duration by which the falling edge of the third thyristor advances ahead of the phase 180° moment of the first alternating-current voltage is set to be equal to the sixth duration by which the falling edge of the fourth thyristor advances ahead of the phase 360° moment of the first alternating-current voltage.

### BRIEF DESCRIPTION OF DRAWINGS

FIG. 1 is a diagram of a structure of an existing uninterruptible power supply system;
FIG. 2 is a schematic graph of waveforms of an existing uninterruptible power supply system in an ECO mode;
FIG. 3a is a schematic graph of waveforms of an existing uninterruptible power supply system connected to a capacitive load;
FIG. 3b is a schematic graph of waveforms of an existing uninterruptible power supply system with a leading phase;
FIG. 3c is a schematic graph of waveforms of an existing uninterruptible power supply system with a lagging phase;
FIG. 3d is a schematic graph of waveforms of an existing uninterruptible power supply system with drop distortion of a voltage of a bypass occurring near a zero-crossing point;
FIG. 4 is a diagram of a structure of an uninterruptible power supply system according to an embodiment of this application;
FIG. 5 is a schematic graph of waveforms of an uninterruptible power supply system according to an embodiment of this application;
FIG. 6 is a schematic graph of waveforms of an uninterruptible power supply system connected to a capacitive load according to an embodiment of this application;
FIG. 7 is a schematic graph of waveforms of an uninterruptible power supply system with a leading phase according to an embodiment of this application;
FIG. 8 is a schematic graph of waveforms of an uninterruptible power supply system with a lagging phase according to an embodiment of this application; and
FIG. 9 is a schematic graph of waveforms of an uninterruptible power supply system with drop distortion of a voltage of a bypass occurring near a zero-crossing point according to an embodiment of this application.

### DESCRIPTION OF EMBODIMENTS

The following describes technical solutions in embodiments of this application with reference to the accompanying drawings in embodiments of this application. It is clear that the described embodiments are merely some rather than all of embodiments of this application.

Terms such as "first" and "second" below are merely used for ease of description, and shall not be understood as indicating or implying relative importance or implicitly indicating a quantity of indicated technical features. Therefore, a feature limited by "first", "second", or the like may explicitly or implicitly include one or more features. In the descriptions of this application, unless otherwise stated, "a plurality of" means two or more than two.

In addition, in embodiments of this application, orientation terms such as "upper", "lower", "left", and "right" may include but are not limited to definitions based on illustrated orientations in which components in the accompanying drawings are placed. It should be understood that, these directional terms may be relative concepts. They are used for relative description and clarification, and may vary accordingly depending on a change in the orientations in which the components in the accompanying drawings are placed.

In embodiments of this application, unless otherwise clearly specified and limited, a term "connection" should be understood in a broad sense. For example, the "connection" may be a fixed connection, a detachable connection, or an integrated connection, or may be a direct connection or an indirect connection through an intermediate medium. In addition, a term "coupling" may be a direct electrical connection, or may be an indirect electrical connection through an intermediate medium. A term "contact" may be direct contact or indirect contact through an intermediate medium.

In embodiments of this application, "and/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects.

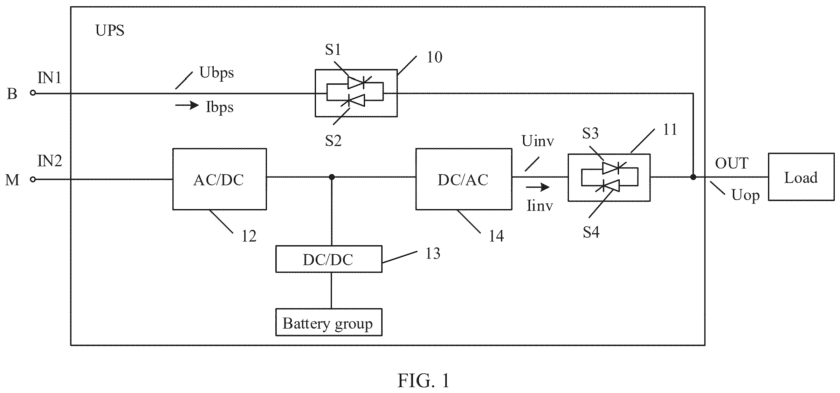

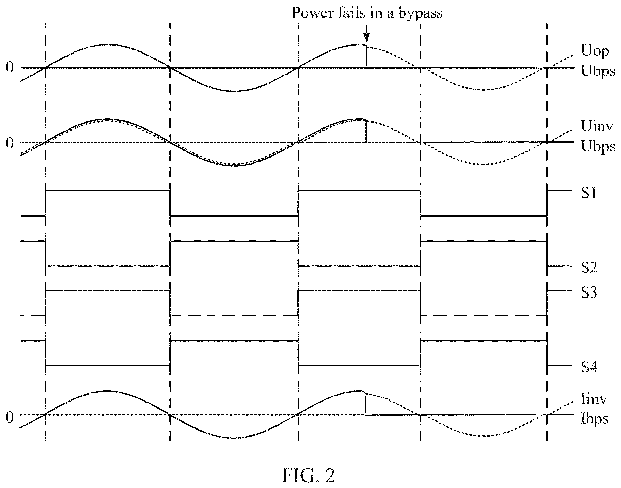

FIG. 1 is a diagram of a structure of an existing uninterruptible power supply system. FIG. 2 is a schematic graph of waveforms of an existing uninterruptible power supply system in an ECO mode.

In the ECO mode, the UPS system is required to switch quickly to a main to supply power in the case of a power interruption or failure in a bypass, to ensure uninterrupted outputting. As shown in FIG. 1, in the conventional technology, to implement uninterrupted switching between a main M and a bypass B in the ECO mode, a bypass bidirectional switch, that is, a first bidirectional switch 10, is provided in the bypass B, and an inverter bidirectional switch, that is, a second bidirectional switch 11, is provided at an output end of an inverter circuit (DC/AC) 14 of the main M. The first bidirectional switch 10 is formed by connecting a group of forward silicon controlled rectifiers (silicon controlled rectifier, SCR), also referred to as first thyristors S1, and a group of reverse SCRs, that is, second thyristors S2, in reverse parallel, and the second bidirectional switch 11 is formed by connecting a group of forward SCRs, that is, third thyristors S3, and a group of reverse SCRs, that is, fourth thyristors S4, in reverse parallel. As shown in FIG. 2, the forward SCRs and the reverse SCRs in the first bidirectional switch 10 and the second bidirectional switch 11 are driven independently, and turn-on/off driving actions are performed synchronously and alternately based on phase ranges of an input voltage of the bypass B. Specifically, in a period of a phase 0° moment of a bypass voltage, that is, a first alternating-current voltage Ubps, to a phase 180° moment of the bypass voltage, that is, the first alternating-current voltage Ubps, a turn-on drive signal is applied to the first thyristor S1 and the third thyristor S3, and a turn-off drive signal is applied to the second thyristor S2 and the fourth thyristor S4; and in a period of the phase 180° moment of the bypass voltage, that is, the first alternating-current voltage Ubps, to a phase 360° moment of the bypass voltage, that is, the first alternating-current voltage Ubps, a turn-on drive signal is applied to the second thyristor S2 and the fourth thyristor S4, and a turn-off drive signal is applied to the first thyristor S1 and the third thyristor S3. In this application, there may be a plurality of manners of setting a phase moment of the first alternating-current voltage Ubps. For example, the phase 0° moment of the first alternating-current voltage Ubps is the first moment, detected by the phase-locking unit, at which the first alternating-current voltage Ubps passes through a zero potential from a negative voltage to a positive voltage in a voltage cycle, and the voltage cycle starts from this moment; the phase 180° moment of the first alternating-current voltage Ubps is a moment, detected by the phase-locking unit, at which the first alternating-current voltage Ubps passes through a zero potential from a positive voltage to a negative voltage in the voltage cycle; and the phase 360° moment of the first alternating-current voltage Ubps is the second moment, detected by the phase-locking unit, at which the first alternating-current voltage Ubps passes through a zero potential from a negative voltage to a positive voltage in the voltage cycle. The inverter circuit 14 is in hot standby, and an amplitude of a third alternating-current voltage Uinv output by the inverter circuit 14 may be set to be less than an amplitude of the first alternating-current voltage Ubps by a specific value. When the first alternating-current voltage Ubps of the bypass B is normal, the second bidirectional switch 11, that is, the third thyristor S3 and the fourth thyristor S4, withstands a reverse voltage and is then turned off, an output current Iinv of the main M is a zero current, the bypass B performs outputting normally, and an output voltage Uop at an output end OUT of the UPS system is the first alternating-current voltage Ubps. When the first alternating-current voltage Ubps of the bypass B is in a power failure case, the second bidirectional switch 11, that is, the third thyristor S3 and the fourth thyristor S4, is naturally turned on, the first bidirectional switch 10, that is, the first thyristor S1 and the second thyristor S2, withstands a reverse voltage and is then turned off, an output current Ibps of the bypass B is a zero current, the inverter circuit 14 performs outputting normally, and the output voltage Uop at the output end OUT of the UPS system is the third alternating-current voltage Uinv. In this way, switching between the bypass B and the main M is implemented.

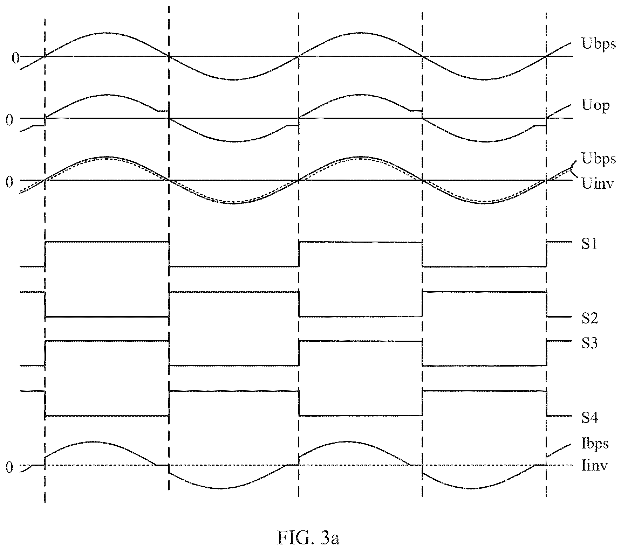

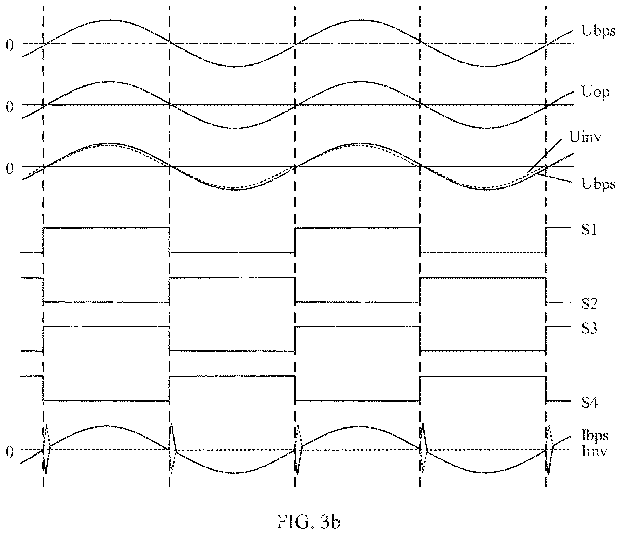

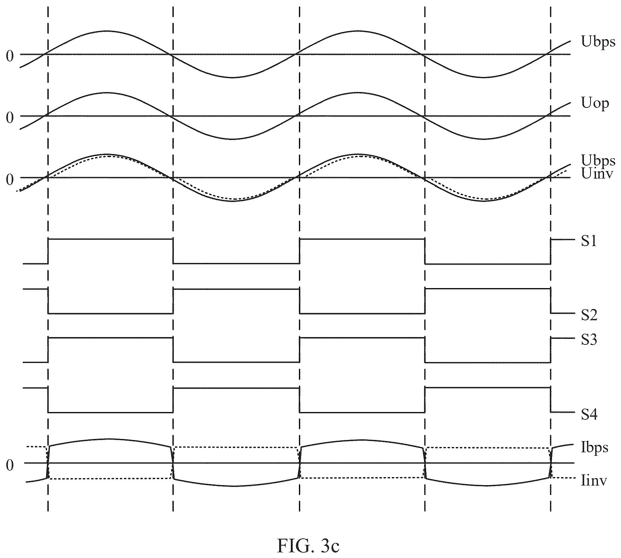

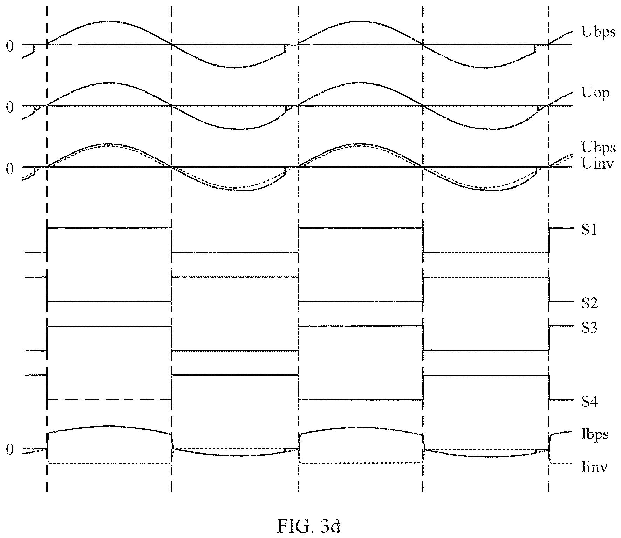

FIG. 3a is a schematic graph of waveforms of an existing uninterruptible power supply system connected to a capacitive load. FIG. 3b is a schematic graph of waveforms of an existing uninterruptible power supply system with a leading phase. FIG. 3c is a schematic graph of waveforms of an existing uninterruptible power supply system with a lagging phase. FIG. 3d is a schematic graph of waveforms of an existing uninterruptible power supply system with drop distortion of a voltage of a bypass occurring near a zero-crossing point.

The foregoing technical solution has the following drawbacks: The technical solution is applicable only to particular loads, and the first bidirectional switch 10 and the second bidirectional switch 11 are driven in a fully synchronized manner to implement completely uninterrupted outputting during the switching between the bypass B and the main M, leading to poor adaptability to different operating conditions in the case of steady outputting of the UPS system. Specific problems are as follows:

As shown in FIG. 3a, when the UPS system supplies power to a capacitive load with a leading power factor (power factor, PF), and when the PF of the load fluctuates, a current whose phase leads that of a voltage causes distortion of the output voltage Uop of the UPS system.

If there is a phase deviation between the third alternating-current voltage Uinv output by the inverter circuit 14 of the main M and the first alternating-current voltage Ubps, the output voltage of the bypass B is backfed to the main M. FIG. 3b shows a case in which a phase of the third alternating-current voltage Uinv leads a phase of the first alternating-current voltage Ubps. FIG. 3c shows a case in which a phase of the third alternating-current voltage Uinv lags behind a phase of the first alternating-current voltage Ubps.

As shown in FIG. 3d, when the first alternating-current voltage Ubps drops below the third alternating-current voltage Uinv near a voltage zero-crossing point, the output voltage of the bypass B is backfed to the main M.

In conclusion, the current technical solution has poor adaptability to different operating conditions, including a capacitive load, a phase deviation between an output voltage of the bypass and an output voltage of the main, drop distortion of a voltage of the bypass occurring near a voltage zero-crossing point, and the like, resulting in low reliability of the system.

Based on this, embodiments of this application provide an uninterruptible power supply system. In an ECO mode, rising edge moments and falling edge moments at which a bypass bidirectional switch, that is, the first bidirectional switch 10, and an inverter bidirectional switch, that is, the second bidirectional switch 11, are driven are designed properly, so that adaptability to different application and operating conditions can be improved, enhancing reliability of the system, without significantly affecting switching between the bypass B and the main M. In a digital circuit, an instant (moment) at which a digital level changes from a low level (a digit "0") to a high level (a digit "1") is referred to as a rising edge, and an instant at which a digital level changes from a high level (a digit "1") to a low level (a digit "0") is referred to as a falling edge.

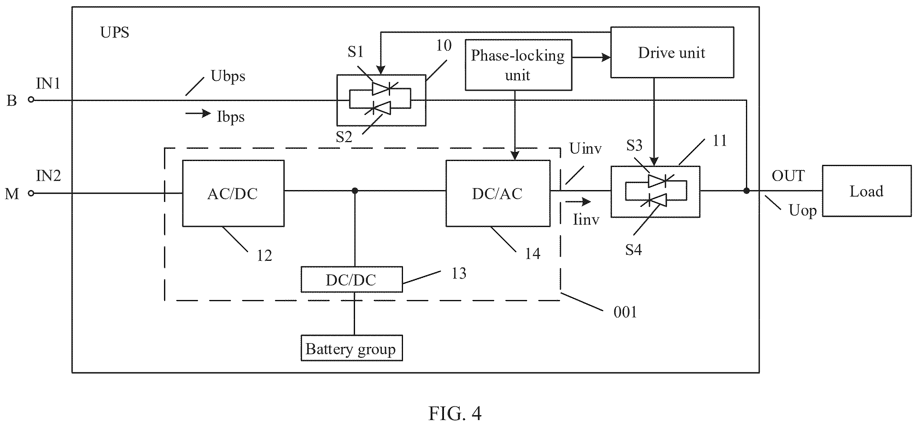

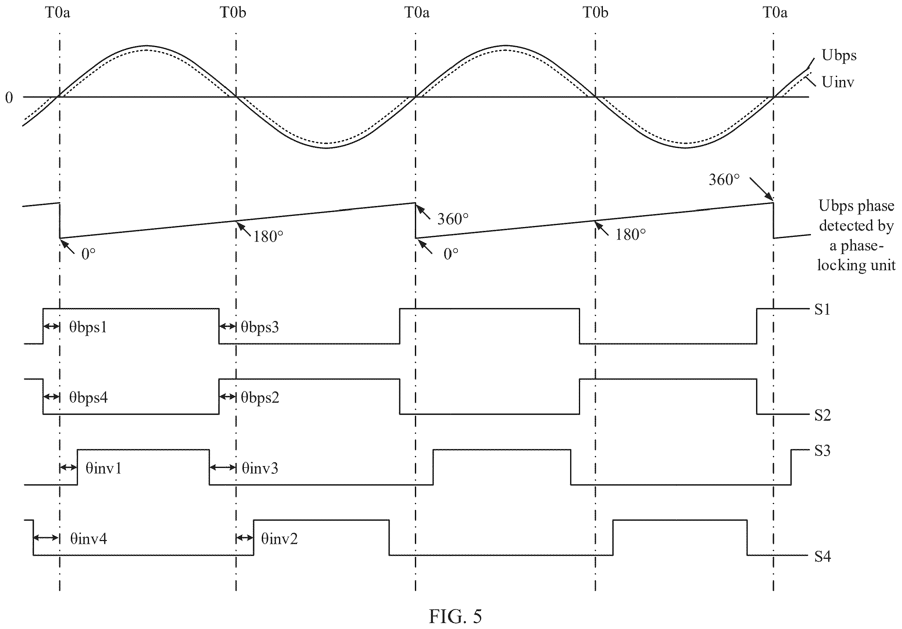

FIG. 4 is a diagram of a structure of an uninterruptible power supply system according to an embodiment of this application. FIG. 5 is a schematic graph of waveforms of an uninterruptible power supply system according to an embodiment of this application.

As shown in FIG. 4, the uninterruptible power supply system provided in this embodiment of this application specifically includes a first input end IN1, a second input end IN2, an output end OUT, a bypass B, a main M, and a drive unit. The first input end IN1 is configured to receive a first alternating-current voltage Ubps, the second input end IN2 is configured to receive a second alternating-current voltage, and the output end OUT is configured to connect to a load. During specific application, the first input end IN1 and the second input end IN2 are connected to an electric power system. The electric power system may be a power plant, a transformer station, or the like. The first alternating-current voltage Ubps and the second alternating-current voltage may be a same alternating-current voltage, or the first alternating-current voltage Ubps and the second alternating-current voltage may be different alternating-current voltages. The load may be electrical equipment in a factory, or may be a communication device, for example, a server in a data center. During normal operation of the electric power system, one part of electric power supplied by the electric power system is transmitted to the load through the uninterruptible power supply system, and the other part of the electric power supplied by the electric power system is stored in the uninterruptible power supply system. During abnormal operation of the electric power system, the electric power system cannot transmit electric power to the load. In this case, the electric power stored in the uninterruptible power supply system is transmitted to the load, for the load to obtain required electric power from the uninterruptible power supply system.

As shown in FIG. 4, the bypass B includes a bypass bidirectional switch, that is, a first bidirectional switch 10, the first bidirectional switch 10 is connected between the first input end IN1 and the output end OUT, and the first bidirectional switch 10 is configured to control the first input end IN1 and the output end OUT to be connected or disconnected. The first bidirectional switch 10 includes a first thyristor S1 and a second thyristor S2 that are connected in parallel. An anode of the first thyristor S1 is connected to the first input end IN1, a cathode of the first thyristor S1 is connected to the output end OUT, an anode of the second thyristor S2 is connected to the output end OUT, and a cathode of the second thyristor S2 is connected to the first input end IN1. As shown in FIG. 5, in an ECO mode, the drive unit applies alternating turn-on drive signals to the first thyristor S1 and the second thyristor S2, for the first input end IN1 and the output end OUT to be connected. In other words, in the ECO mode, the turn-on drive signal of the first thyristor S1 and the turn-on drive signal of the second thyristor S2 do not overlap. Specifically, when the turn-on drive signal is applied to the first thyristor S1, a turn-off drive signal is applied to the second thyristor S2, or when the turn-on drive signal is applied to the second thyristor S2, a turn-off drive signal is applied to the first thyristor S1. In a double-conversion mode, the drive unit controls the first thyristor S1 and the second thyristor S2 to be turned off, for the first input end IN1 and the output end OUT to be disconnected.

Refer to FIG. 4. The uninterruptible power supply system may include one or more mains M. The main M includes a power conversion circuit 001 and an inverter bidirectional switch, that is, a second bidirectional switch 11, an input end of the power conversion circuit 001 is connected to the second input end IN2, an output end of the power conversion circuit 001 is connected to the second bidirectional switch 11, the power conversion circuit 001 is configured to perform power conversion on the second alternating-current voltage and then output a third alternating-current voltage Uinv, and an amplitude of the third alternating-current voltage Uinv is less than an amplitude of the first alternating-current voltage Ubps. For example, the first alternating-current voltage Ubps is 220 V, and the third alternating-current voltage Uinv may be controlled to 205 V. When the first alternating-current voltage Ubps input to the first input end IN1 is normal, the second bidirectional switch 11 withstands a reverse voltage and is then turned off, the first bidirectional switch 10 withstands a forward voltage and is then turned on, and the first alternating-current voltage Ubps input to the first input end IN1 is transmitted to the output end OUT. When the first alternating-current voltage Ubps input to the first input end IN1 is abnormal, for example, in an undervoltage or power failure case, the first bidirectional switch 10 withstands a reverse voltage and is then turned off, the second bidirectional switch 11 withstands a forward voltage and is then turned on, and the third alternating-current voltage Uinv output by the power conversion circuit 001 is transmitted to the output end OUT. The power conversion circuit 001 specifically includes a rectifier circuit (AC/DC) 12, an inverter circuit (DC/AC) 14, and a charge and discharge circuit (DC/DC) 13. The charge and discharge circuit 13 is configured to connect to a battery group. When the second alternating-current voltage provided by the second input end IN2 is normal, the second alternating-current voltage is converted and regulated by the rectifier circuit 12 and the inverter circuit 14 and then provided to the second bidirectional switch 11, and may also pass through the charge and discharge circuit 13 to charge the battery group. When the second alternating-current voltage of the second input end IN2 is interrupted (for example, an accidental power failure), direct-current electric power of the battery group is converted and regulated by the charge and discharge circuit 13 and the inverter circuit 14 and then provided to the second bidirectional switch 11. The second bidirectional switch 11 is connected between the output end of the power conversion circuit 001 and the output end OUT, and the second bidirectional switch 11 is configured to control the output end of the power conversion circuit 001 and the output end OUT to be connected or disconnected. The second bidirectional switch 11 includes a third thyristor S3 and a fourth thyristor S4 that are connected in parallel, an anode of the third thyristor S3 is connected to the output end of the power conversion circuit 001, a cathode of the third thyristor S3 is connected to the output end OUT, an anode of the fourth thyristor S4 is connected to the output end OUT, and a cathode of the fourth thyristor S4 is connected to the output end of the power conversion circuit 001. As shown in FIG. 5, the drive unit applies alternating turn-on drive signals to the third thyristor S3 and the fourth thyristor S4, that is, the turn-on drive signals are not applied to the third thyristor S3 and the fourth thyristor S4 simultaneously. Specifically, when the turn-on drive signal is applied to the third thyristor S3, a turn-off drive signal is applied to the fourth thyristor S4, or when the turn-on drive signal is applied to the fourth thyristor S4, a turn-off drive signal is applied to the third thyristor S3.

Refer to FIG. 4. The uninterruptible power supply system further includes a phase-locking unit, the phase-locking unit is configured to detect phase information of the first alternating-current voltage Ubps input to the first input end IN1, and the phase information is also transferred to the inverter circuit 14 and the drive unit. The inverter circuit 14 outputs and transfers, based on the phase information, the third alternating-current voltage Uinv that is in a same phase as the first alternating-current voltage Ubps to the second bidirectional switch 11. The drive unit performs drive control separately on the first bidirectional switch 10 and the second bidirectional switch 11 based on the phase information.

Refer to FIG. 5. A manner of driving the first bidirectional switch 10 is as follows: In a period of a phase 0° moment of the first alternating-current voltage Ubps to a phase 180° moment of the first alternating-current voltage Ubps input to the first input end IN1, a turn-on drive signal is applied to the first thyristor S1, and a turn-off drive signal is applied to the second thyristor S2; and in a period of the phase 180° moment of the first alternating-current voltage Ubps to a phase 360° moment of the first alternating-current voltage Ubps input to the first input end IN1, a turn-off drive signal is applied to the first thyristor S1, and a turn-on drive signal is applied to the second thyristor S2. A manner of driving the second bidirectional switch is as follows: In a period of a phase 0° moment of the first alternating-current voltage Ubps to a phase 180° moment of the first alternating-current voltage Ubps input to the first input end IN1, a turn-on drive signal is applied to the third thyristor S3, and a turn-off drive signal is applied to the fourth thyristor S4; and in a period of the phase 180° moment of the first alternating-current voltage Ubps to a phase 360° moment of the first alternating-current voltage Ubps input to the first input end IN1, a turn-off drive signal is applied to the third thyristor S3, and a turn-on drive signal is applied to the fourth thyristor S4.

In this application, the drive unit adjusts a rising edge of the turn-on drive signal and a falling edge moment of the turn-off drive signal, for example, the rising edge advances ahead of or lags behind the phase 0° moment or the phase 180° moment of the first alternating-current voltage Ubps, and the drive turn-on falling edge advances ahead of or lags behind the phase 180° moment or the phase 360° moment of the first alternating-current voltage Ubps, to adapt to different operating conditions.

Refer to FIG. 5. In this application, to improve adaptability of the uninterruptible power supply system to different loads, especially to improve adaptability to a connected capacitive load with a leading PF and adaptability to PF fluctuation of a load, the drive unit may adjust rising edges of the first thyristor S1 and the second thyristor S2 to advance ahead of zero-potential moments of the first alternating-current voltage Ubps by a specific phase angle. Specifically, the drive unit may adjust the rising edge of the first thyristor S1 to advance ahead of a first zero-potential moment T0a of the first alternating-current voltage Ubps by an angle θbps1, for the rising edge moment of the first thyristor S1 to be earlier than the first zero-potential moment T0a of the first alternating-current voltage Ubps, where the first zero-potential moment T0a of the first alternating-current voltage Ubps is a moment at which the first alternating-current voltage Ubps passes through a zero potential from a negative voltage to a positive voltage. The drive unit may adjust the rising edge of the second thyristor S2 to advance ahead of a second zero-potential moment TOb of the first alternating-current voltage Ubps by an angle θbps2, for the rising edge moment of the second thyristor S2 to be earlier than the second zero-potential moment TOb of the first alternating-current voltage Ubps, where the second zero-potential moment TOb of the first alternating-current voltage Ubps is a moment at which the first alternating-current voltage Ubps passes through a zero potential from a positive voltage to a negative voltage. Specifically, advance angles of the rising edges of the first thyristor S1 and the second thyristor S2 may be selected based on a requirement of a load with a leading PF and PF fluctuation of a load.

Refer to FIG. 5. In this application, due to a phase-locked leading deviation, that is, a phase of the third alternating-current voltage Uinv leads a phase of the first alternating-current voltage Ubps, near a voltage zero-crossing point of the first alternating-current voltage Ubps, both the first thyristor S1 and the fourth thyristor S4 are turned on simultaneously, and both the second thyristor S2 and the third thyristor S3 are turned on simultaneously, leading to backfeed of an output voltage of the bypass B to the main M. To avoid this problem, the drive unit may adjust rising edges of the third thyristor S3 and the fourth thyristor S4 to be respectively delayed beyond the phase 0° moment and the phase 180° moment of the first alternating-current voltage Ubps by a specific phase angle. After the drive adjustment, application of a turn-on drive signal to the third thyristor S3 due to a phase-locked leading deviation in a time period in which an instantaneous value of the third alternating-current voltage Uinv is greater than an instantaneous value of the first alternating-current voltage Ubps is avoided, and application of a turn-on drive signal to the fourth thyristor S4 due to a phase-locked leading deviation in a time period in which an instantaneous value of the third alternating-current voltage Uinv is less than an instantaneous value of the first alternating-current voltage Ubps is avoided, thereby avoiding backfeed of an output voltage of the bypass B to the main M due to simultaneous turn-on of the first bidirectional switch 10 and the second bidirectional switch 11. Specifically, the drive unit may adjust the rising edge of the third thyristor S3 to be delayed beyond the phase 0° moment of the first alternating-current voltage Ubps by an angle θinv1, for the rising edge moment of the third thyristor S3 to be later than the phase 0° moment of the first alternating-current voltage Ubps. The drive unit may adjust the rising edge of the fourth thyristor S4 to be delayed beyond the phase 180° moment of the first alternating-current voltage Ubps by an angle θinv2, for the rising edge moment of the fourth thyristor S4 to be later than the phase 180° moment of the first alternating-current voltage Ubps. Specifically, delay angles of the rising edges of the third thyristor S3 and the fourth thyristor S4 may be selected based on a phase-locked leading deviation.

Refer to FIG. 5. In this application, due to a phase-locked lagging deviation, that is, a phase of the third alternating-current voltage Uinv lags behind a phase of the first alternating-current voltage Ubps, and drop distortion of the first alternating-current voltage Ubps before the first zero-potential moment T0a or the second zero-potential moment T0b, the second bidirectional switch 11 is turned on at an unexpected moment, leading to backfeed of an output voltage of the bypass B to the main M. To avoid this problem, the drive unit may adjust falling edges of the third thyristor S3 and the fourth thyristor S4 to advance respectively ahead of the phase 180° moment and the phase 360° moment of the first alternating-current voltage Ubps by a specific phase angle. After the drive adjustment, application of a turn-on drive signal to the third thyristor S3 due to a phase-locked lagging deviation in a time period in which an instantaneous value of the third alternating-current voltage Uinv is greater than an instantaneous value of the first alternating-current voltage Ubps is avoided, and application of a turn-on drive signal to the fourth thyristor S4 due to a phase-locked lagging deviation in a time period in which an instantaneous value of the third alternating-current voltage Uinv is less than an instantaneous value of the first alternating-current voltage Ubps is avoided, thereby avoiding simultaneous turn-on of the first bidirectional switch 10 and the second bidirectional switch 11. This can adapt to the operating condition of a phase-locked lagging deviation or drop distortion of an output voltage of the bypass occurring near a voltage zero-crossing point. Specifically, the drive unit may adjust the falling edge of the third thyristor S3 to advance ahead of the phase 180° moment of the first alternating-current voltage Ubps by an angle θinv3, for the falling edge moment of the third thyristor S3 to be earlier than the phase 180° moment of the first alternating-current voltage Ubps. The drive unit may adjust the falling edge of the fourth thyristor S4 to advance ahead of the phase 360° moment of the first alternating-current voltage Ubps by an angle θinv4, for the falling edge moment of the fourth thyristor S4 to be earlier than the phase 360° moment of the first alternating-current voltage Ubps. Specifically, advance angles of the falling edges of the third thyristor S3 and the fourth thyristor S4 may be selected by balancing a phase-locked lagging deviation and drop distortion of the first alternating-current voltage Ubps.

In this application, any one or more of the foregoing adjustments may be performed based on an operating condition of the uninterruptible power supply system. For example, only the rising edges of the first thyristor S1 and the second thyristor S2 may be adjusted to advance respectively ahead of the first zero-potential moment and the second zero-potential moment of the first alternating-current voltage Ubps by a specific phase angle. Alternatively, only the rising edges of the third thyristor S3 and the fourth thyristor S4 may be adjusted to be respectively delayed beyond the phase 0° moment and the phase 180° moment of the first alternating-current voltage Ubps by a specific phase angle. Alternatively, only the falling edges of the third thyristor S3 and the fourth thyristor S4 may be adjusted to advance respectively ahead of the phase 180° moment and the phase 360° moment of the first alternating-current voltage Ubps by a specific phase angle. The following describes in detail adjustment of features that need to be met in different operating conditions.

### Embodiment 1:

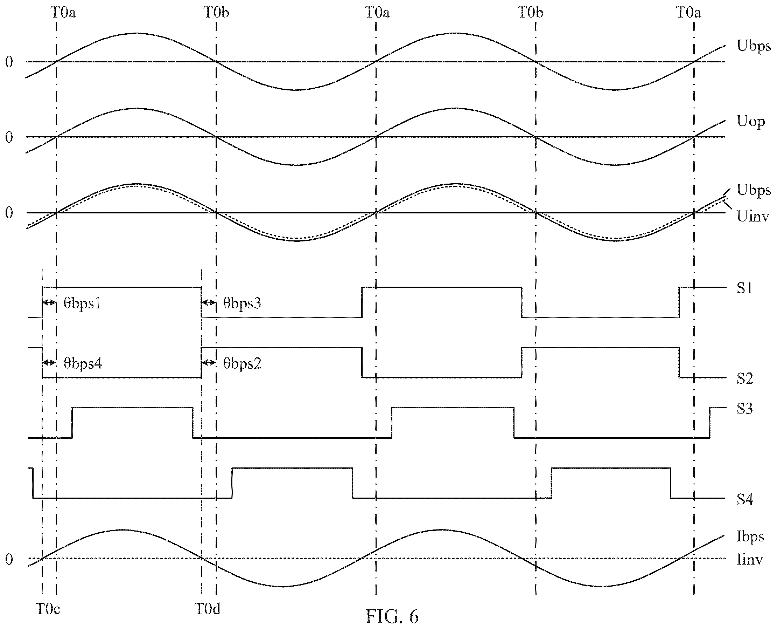

FIG. 6 is a schematic graph of waveforms of an uninterruptible power supply system connected to a capacitive load according to an embodiment of this application.

As shown in FIG. 6, in this embodiment, an output end OUT of an uninterruptible power supply system is connected to a capacitive load, for example, a capacitive load with a PF of 0.95. When the output end OUT is connected to the capacitive load, a current phase of the output end OUT advances ahead of a voltage phase, so that a moment at which an output current Ibps of a bypass B is a zero current advances ahead of a moment at which a first alternating-current voltage Ubps is a zero potential. To ensure an uninterrupted voltage at the output end OUT, a drive unit needs to adjust a rising edge moment of a first thyristor S1 to be earlier than or equal to a first zero-current moment TOc of a current at the output end OUT, that is, the output current Ibps of the bypass, where the first zero-current moment TOc of the current at the output end OUT, that is, the output current Ibps of the bypass, is a moment at which the current at the output end OUT, that is, the output current Ibps of the bypass passes through a zero current from a negative current to a positive current. Before the first zero-current moment TOc of the output current Ibps of the bypass B, a turn-on drive has been applied to the first thyristor S1. Therefore, the voltage Uop at the output end OUT is uninterrupted, so that adaptability of the uninterruptible power supply system to loads is enhanced. Similarly, the drive unit needs to adjust a rising edge moment of a second thyristor S2 to be earlier than or equal to a second zero-current moment TOd of the current at the output end OUT, that is, the output current Ibps of the bypass, where the second zero-current moment TOd of the current at the output end OUT, that is, the output current Ibps of the bypass, is a moment at which the current at the output end OUT, that is, the output current Ibps of the bypass passes through a zero current from a positive current to a negative current. Before the second zero-current moment TOd of the output current Ibps of the bypass B, a turn-on drive has been applied to the second thyristor S2. Therefore, the voltage Uop at the output end OUT is uninterrupted, so that adaptability of the uninterruptible power supply system to loads is enhanced.

For example, it is assumed that a leading phase difference between the current phase and the voltage phase is a first phase angle, duration by which the rising edge of the first thyristor S1 is earlier than the first zero-potential moment T0a of the first alternating-current voltage Ubps is first duration, and duration by which the rising edge of the second thyristor S2 is earlier than the second zero-potential moment TOb of the first alternating-current voltage Ubps is second duration. The first duration is positively correlated with the first phase angle, that is, a larger first phase angle indicates longer first duration. The second duration is positively correlated with the first phase angle, that is, a larger first phase angle indicates longer second duration.

As shown in FIG. 6, in this embodiment, to facilitate drive control, an angle θbps1 by which the rising edge of the first thyristor S1 advances ahead of the first zero-potential moment T0a of the first alternating-current voltage Ubps may be set to be equal to the first phase angle by which the current phase advances ahead of the voltage phase. For example, θbps1 = 18°. In addition, an angle θbps2 by which the rising edge of the second thyristor S2 advances ahead of the second zero-potential moment TOb of the first alternating-current voltage Ubps may be set to be equal to the first phase angle by which the current phase advances ahead of the voltage phase. For example, θbps2 = 18°. In other words, the angle θbps1 is equal to the angle θbps2. In other words, the first duration by which the rising edge of the first thyristor S1 is earlier than the first zero-potential moment T0a of the first alternating-current voltage Ubps is set to be equal to the second duration by which the rising edge of the second thyristor S2 is earlier than the second zero-potential moment TOb of the first alternating-current voltage Ubps.

In this embodiment, to ensure that a turn-on drive signal of the first thyristor S1 and a turn-on drive signal of the second thyristor S2 do not overlap, that is, the turn-on drive signals are not applied to the first thyristor S1 and the second thyristor S2 simultaneously, the drive unit needs to adjust falling edges of the first thyristor S1 and the second thyristor S2 to advance respectively ahead of the second zero potential and the first zero potential of the first alternating-current voltage Ubps by a specific phase angle. Specifically, the drive unit may adjust the falling edge of the first thyristor S1 to advance ahead of the second zero-potential moment TOb of the first alternating-current voltage Ubps by an angle θbps3, for the falling edge moment of the first thyristor S1 to be earlier than or equal to the rising edge moment of the second thyristor S2. The drive unit may adjust the falling edge of the second thyristor S2 to advance ahead of the first zero-potential moment T0a of the first alternating-current voltage Ubps by an angle θbps4, for the falling edge moment of the second thyristor S2 to be earlier than or equal to the rising edge moment of the first thyristor S1.

As shown in FIG. 6, in this embodiment, to facilitate drive control, the falling edge moment of the first thyristor S1 and the rising edge moment of the second thyristor S2 may be set to a same moment, that is, the angle θbps3 is equal to the angle θbps2, and the falling edge moment of the second thyristor S2 and the rising edge moment of the first thyristor S1 may be set to a same moment, that is, the angle θbps4 is equal to the angle θbps1.

### Embodiment 2:

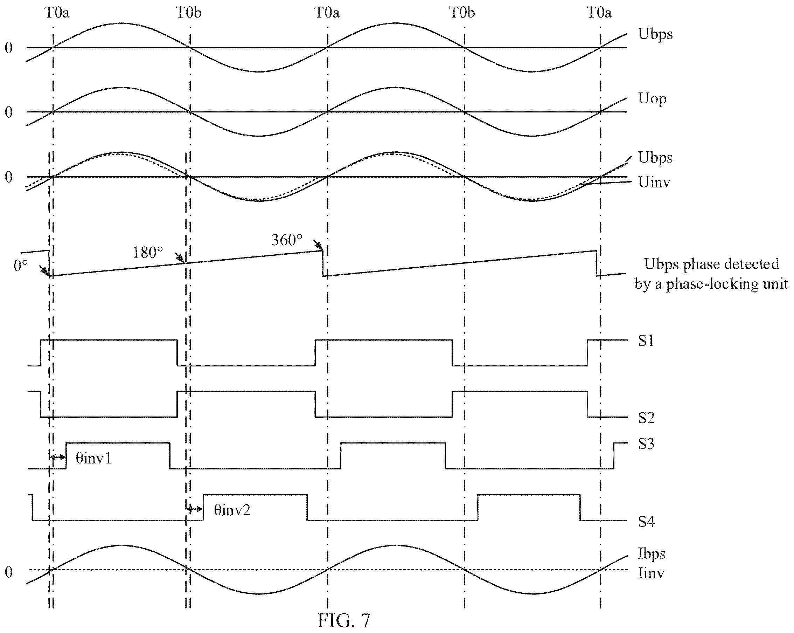

FIG. 7 is a schematic graph of waveforms of an uninterruptible power supply system with a leading phase according to an embodiment of this application.

As shown in FIG. 7, in this embodiment, a phase-locking unit detects that there is a leading deviation in phase information of a first alternating-current voltage Ubps input to a first input end IN1, that is, a phase of a third alternating-current voltage Uinv advances ahead of a phase of the first alternating-current voltage Ubps by an advance angle of, for example, 3°, and an output end OUT may be, for example, connected to a resistive load. A phase of the third alternating-current voltage Uinv advances ahead of a phase of the first alternating-current voltage Ubps. As a result, a moment at which the third alternating-current voltage Uinv passes through a zero potential advances ahead of a moment at which the first alternating-current voltage Ubps passes through a zero potential, and a case occurs: a rising edge of a third thyristor S3 appears in a time period in which an instantaneous value of the third alternating-current voltage Uinv is greater than an instantaneous value of the first alternating-current voltage Ubps, and a rising edge of a fourth thyristor S4 appears in a time period in which an instantaneous value of the third alternating-current voltage Uinv is less than an instantaneous value of the first alternating-current voltage Ubps. To avoid backfeed of an output voltage of a bypass B to a main M due to the foregoing case, a drive unit needs to adjust the rising edge moment of the third thyristor S3 to lag behind or be equal to a first moment, and the rising edge of the fourth thyristor S4 to lag behind or be equal to a second moment, where the first moment is a moment at which an instantaneous value of the third alternating-current voltage Uinv being greater than an instantaneous value of the first alternating-current voltage Ubps changes to an instantaneous value of the third alternating-current voltage Uinv being less than an instantaneous value of the first alternating-current voltage Ubps, and the second moment is a moment at which an instantaneous value of the third alternating-current voltage Uinv being less than an instantaneous value of the first alternating-current voltage Ubps changes to an instantaneous value of the third alternating-current voltage Uinv being greater than an instantaneous value of the first alternating-current voltage Ubps. A turn-on drive signal is applied to the third thyristor S3 only after the instantaneous value of the third alternating-current voltage Uinv is less than the instantaneous value of the first alternating-current voltage Ubps, and a turn-on drive signal is applied to the fourth thyristor S4 only after the instantaneous value of the third alternating-current voltage Uinv is greater than the instantaneous value of the first alternating-current voltage Ubps. Therefore, there is no backfeed of an output voltage of the bypass B to the main M, so that adaptability of the uninterruptible power supply system to a phase-locked leading deviation is enhanced.

For example, it is assumed that a leading phase difference between the third alternating-current voltage Uinv and the first alternating-current voltage Ubps is a second phase angle, duration by which the rising edge of the third thyristor S3 is later than the phase 0° moment of the first alternating-current voltage Ubps is third duration, and duration by which the rising edge of the fourth thyristor S4 is later than the phase 180° moment of the first alternating-current voltage Ubps is fourth duration. The third duration is positively correlated with the second phase angle, that is, a larger second phase angle indicates longer third duration. The fourth duration is positively correlated with the second phase angle, that is, a larger second phase angle indicates longer fourth duration.

In this embodiment, to facilitate drive control and allow for a margin, an angle θinv1 by which the rising edge of the third thyristor S3 is delayed beyond the phase 0° moment of the first alternating-current voltage Ubps may be set to be greater than the second phase angle by which the third alternating-current voltage Uinv advances ahead of the first alternating-current voltage Ubps. For example, θinv1 = 18°. In addition, an angle θinv2 by which the rising edge of the fourth thyristor S4 is delayed beyond the phase 180° moment of the first alternating-current voltage Ubps may be set to be greater than the second phase angle by which the third alternating-current voltage Uinv advances ahead of the first alternating-current voltage Ubps. For example, θinv2 = 18°. In other words, the angle θinv1 is equal to the angle θinv2. In other words, the third duration by which the rising edge of the third thyristor S3 lags behind the phase 0° moment of the first alternating-current voltage Ubps is set to be equal to the fourth duration by which the rising edge of the fourth thyristor S4 lags behind the phase 180° moment of the first alternating-current voltage Ubps.

### Embodiment 3:

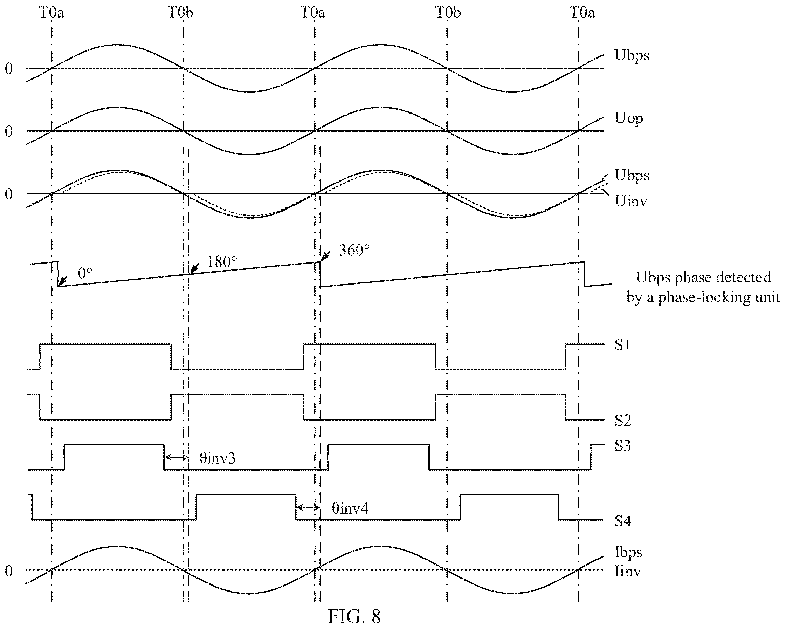

FIG. 8 is a schematic graph of waveforms of an uninterruptible power supply system with a lagging phase according to an embodiment of this application.

As shown in FIG. 8, in this embodiment, a phase-locking unit detects that there is a lagging deviation in phase information of a first alternating-current voltage Ubps input to a first input end IN1, that is, a phase of a third alternating-current voltage Uinv lags behind a phase of the first alternating-current voltage Ubps by a lagging angle of, for example, 3°, and an output end OUT may be, for example, connected to a resistive load. A phase of the third alternating-current voltage Uinv lags behind a phase of the first alternating-current voltage Ubps. As a result, a moment at which the third alternating-current voltage Uinv passes through a zero potential lags behind a moment at which the first alternating-current voltage Ubps passes through a zero potential, and a case occurs: a falling edge of a third thyristor S3 appears in a time period in which an instantaneous value of the third alternating-current voltage Uinv is greater than an instantaneous value of the first alternating-current voltage Ubps, and a falling edge of a fourth thyristor S4 appears in a time period in which an instantaneous value of the third alternating-current voltage Uinv is less than an instantaneous value of the first alternating-current voltage Ubps. To avoid backfeed of an output voltage of a bypass B to a main M due to the foregoing case, a drive unit needs to adjust the falling edge moment of the third thyristor S3 to be earlier than or equal to a third moment, and the falling edge moment of the fourth thyristor S4 to be earlier than or equal to a fourth moment, where the third moment is a moment at which an instantaneous value of the third alternating-current voltage Uinv being less than an instantaneous value of the first alternating-current voltage Ubps changes to an instantaneous value of the third alternating-current voltage Uinv being greater than an instantaneous value of the first alternating-current voltage Ubps, and the fourth moment is a moment at which an instantaneous value of the third alternating-current voltage Uinv being greater than an instantaneous value of the first alternating-current voltage Ubps changes to an instantaneous value of the third alternating-current voltage Uinv being less than an instantaneous value of the first alternating-current voltage Ubps. A turn-off drive signal has been applied to the third thyristor S3 before the instantaneous value of the third alternating-current voltage Uinv is greater than the instantaneous value of the first alternating-current voltage Ubps, and a turn-off drive signal has been applied to the fourth thyristor S4 before the instantaneous value of the third alternating-current voltage Uinv is less than the instantaneous value of the first alternating-current voltage Ubps. Therefore, there is no backfeed of an output voltage of the bypass B to the main M, so that adaptability of the uninterruptible power supply system to a phase-locked lagging deviation is enhanced.

For example, it is assumed that a lagging phase difference between the third alternating-current voltage Uinv and the first alternating-current voltage Ubps is a third phase angle, duration by which the falling edge of the third thyristor S3 is earlier than the phase 180° moment of the first alternating-current voltage Ubps is fifth duration, and duration by which the falling edge of the fourth thyristor S4 is earlier than the phase 360° moment of the first alternating-current voltage Ubps is sixth duration. The fifth duration is positively correlated with the third phase angle, that is, a larger third phase angle indicates longer fifth duration. The sixth duration is positively correlated with the third phase angle, that is, a larger third phase angle indicates longer sixth duration.

In this embodiment, to facilitate drive control and allow for a margin, an angle θinv3 by which the falling edge of the third thyristor S3 advances ahead of the phase 180° moment of the first alternating-current voltage Ubps may be set to be greater than the third phase angle by which the third alternating-current voltage Uinv lags behind the first alternating-current voltage Ubps. For example, θinv3 = 25°. In addition, an angle θinv4 by which the falling edge of the fourth thyristor S4 advances ahead of the phase 360° moment of the first alternating-current voltage Ubps may be set to be greater than the third phase angle by which the third alternating-current voltage Uinv lags behind the first alternating-current voltage Ubps. For example, θinv4 = 25°. In other words, the angle θinv3 is equal to the angle θinv4. In other words, the fifth duration by which the falling edge of the third thyristor S3 advances ahead of the phase 180° moment of the first alternating-current voltage Ubps is set to be equal to the sixth duration by which the falling edge of the fourth thyristor S4 advances ahead of the phase 360° moment of the first alternating-current voltage Ubps.

### Embodiment 4:

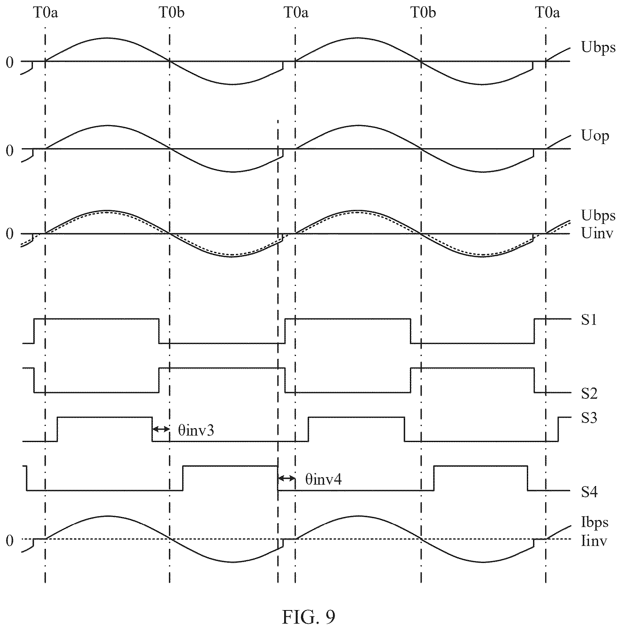

FIG. 9 is a schematic graph of waveforms of an uninterruptible power supply system with drop distortion of a voltage of a bypass occurring near a zero-crossing point according to an embodiment of this application.

As shown in FIG. 9, in this embodiment, a first alternating-current voltage Ubps input to a first input end IN1 experiences drop distortion near a zero potential, for example, experiences drop distortion at a moment 20° before a first zero-potential moment T0a, and an output end OUT may be, for example, connected to a resistive load. Due to the drop distortion of the first alternating-current voltage Ubps, before a third alternating-current voltage Uinv passes through the zero potential, an instantaneous value of the third alternating-current voltage Uinv is less than an instantaneous value of the first alternating-current voltage Ubps. To avoid backfeed of an output voltage of a bypass B to a main M in a period in which the instantaneous value of the third alternating-current voltage Uinv is less than the instantaneous value of the first alternating-current voltage Ubps, a drive unit needs to adjust a falling edge moment of a fourth thyristor S4 to be earlier than or equal to a fourth moment. A turn-off drive signal has been applied to the fourth thyristor S4 before the instantaneous value of the third alternating-current voltage Uinv is less than the instantaneous value of the first alternating-current voltage Ubps. Therefore, there is no backfeed of an output voltage of the bypass B to the main M. Similarly, to avoid backfeed of an output voltage of the bypass B to the main M due to drop distortion of the first alternating-current voltage Ubps before a second zero-potential moment T0b, the drive unit needs to adjust a falling edge moment of a third thyristor S3 to be earlier than or equal to a third moment. In this way, adaptability of the uninterruptible power supply system to drop distortion is enhanced.

In this application, when the uninterruptible power supply system is in the ECO mode, the rising edge of the bypass bidirectional switch, that is, the first bidirectional switch, is advanced by a specified angle before the first alternating-current voltage passing through a zero potential, so that adaptability to a load with a leading PF and adaptability to PF fluctuation of a load can be effectively improved. The rising edge of the inverter bidirectional switch, that is, the second bidirectional switch, is delayed beyond a phase of the first alternating-current voltage by a specified angle, and the falling edge of the inverter bidirectional switch, that is, the second bidirectional switch, is advanced ahead of a locked phase of the first alternating-current voltage by a specified angle, so that backfeed of the output voltage of the bypass to the main due to a phase-locked deviation or drop distortion of a voltage of the bypass can be effectively avoided.

It is clear that a person skilled in the art can make various modifications and variations to this application without departing from the protection scope of this application. This application is intended to cover these modifications and variations of this application provided that they fall within the scope of the claims of this application and their equivalent technologies.

## Claims

1. An uninterruptible power supply system, comprising: a first input end, a second input end, an output end, a bypass, a main, and a drive unit, wherein
the first input end is configured to receive a first alternating-current voltage, the second input end is configured to receive a second alternating-current voltage, and the output end is configured to connect to a load;
the bypass comprises a first bidirectional switch, the first bidirectional switch is connected between the first input end and the output end, and the first bidirectional switch is configured to control the first input end and the output end to be connected or disconnected;
the main comprises a power conversion circuit and a second bidirectional switch, an input end of the power conversion circuit is connected to the second input end, an output end of the power conversion circuit is connected to the second bidirectional switch, and the second bidirectional switch is connected to the output end; the power conversion circuit is configured to perform power conversion on the second alternating-current voltage and then output a third alternating-current voltage, and an amplitude of the third alternating-current voltage is less than an amplitude of the first alternating-current voltage; and the second bidirectional switch is configured to control the output end of the power conversion circuit and the output end to be connected or disconnected;
the first bidirectional switch comprises a first thyristor and a second thyristor, an anode of the first thyristor is connected to the first input end, a cathode of the first thyristor is connected to the output end, an anode of the second thyristor is connected to the output end, and a cathode of the second thyristor is connected to the first input end;
the second bidirectional switch comprises a third thyristor and a fourth thyristor, an anode of the third thyristor is connected to the output end of the power conversion circuit, a cathode of the third thyristor is connected to the output end, an anode of the fourth thyristor is connected to the output end, and a cathode of the fourth thyristor is connected to the output end of the power conversion circuit;
the drive unit is configured to control the first thyristor and the second thyristor to be alternately turned on, and control the third thyristor and the fourth thyristor to be alternately turned on, and a rising edge moment and a falling edge moment meet at least one of the following conditions:
a rising edge moment of the first thyristor is earlier than a first zero-potential moment of the first alternating-current voltage, and a rising edge moment of the second thyristor is earlier than a second zero-potential moment of the first alternating-current voltage;
a rising edge moment of the third thyristor is later than a phase 0° moment of the first alternating-current voltage, and a rising edge moment of the fourth thyristor is later than a phase 180° moment of the first alternating-current voltage; and
a falling edge moment of the third thyristor is earlier than the phase 180° moment of the first alternating-current voltage, and a falling edge moment of the fourth thyristor is earlier than a phase 360° moment of the first alternating-current voltage, wherein
the first zero-potential moment of the first alternating-current voltage is a moment at which the first alternating-current voltage passes through a zero potential from a negative voltage to a positive voltage, and the second zero-potential moment of the first alternating-current voltage is a moment at which the first alternating-current voltage passes through a zero potential from a positive voltage to a negative voltage.

2. The uninterruptible power supply system according to claim 1, wherein a current phase of the output end advances ahead of a voltage phase, the rising edge moment of the first thyristor is earlier than or equal to a first zero-current moment of a current of the output end, and the rising edge moment of the second thyristor is earlier than or equal to a second zero-current moment of the current of the output end, wherein
the first zero-current moment of the current of the output end is a moment at which the current of the output end passes through a zero current from a negative current to a positive current, and the second zero-current moment of the current of the output end is a moment at which the current of the output end passes through a zero current from a positive current to a negative current.

3. The uninterruptible power supply system according to claim 2, wherein a leading phase difference between the current phase and the voltage phase is a first phase angle;
duration by which the rising edge moment of the first thyristor is earlier than the first zero-potential moment of the first alternating-current voltage is first duration, and the first duration is positively correlated with the first phase angle; and
duration by which the rising edge moment of the second thyristor is earlier than the second zero-potential moment of the first alternating-current voltage is second duration, and the second duration is positively correlated with the first phase angle.

4. The uninterruptible power supply system according to claim 3, wherein the first duration is equal to the second duration.

5. The uninterruptible power supply system according to any one of claims 1 to 4, wherein a falling edge moment of the first thyristor and the rising edge moment of the second thyristor are a same moment, and a falling edge moment of the second thyristor and the rising edge moment of the first thyristor are a same moment.

6. The uninterruptible power supply system according to any one of claims 1 to 5, wherein a phase of the third alternating-current voltage leads a phase of the first alternating-current voltage; and
the rising edge moment of the third thyristor lags behind or is equal to the first moment, the rising edge moment of the fourth thyristor lags behind or is equal to the second moment, the first moment is a moment at which an instantaneous value of the third alternating-current voltage being greater than an instantaneous value of the first alternating-current voltage changes to an instantaneous value of the third alternating-current voltage being less than an instantaneous value of the first alternating-current voltage, and the second moment is a moment at which an instantaneous value of the third alternating-current voltage being less than an instantaneous value of the first alternating-current voltage changes to an instantaneous value of the third alternating-current voltage being greater than an instantaneous value of the first alternating-current voltage.

7. The uninterruptible power supply system according to claim 6, wherein a leading phase difference between the third alternating-current voltage and the first alternating-current voltage is a second phase angle;
duration by which the rising edge moment of the third thyristor is later than the phase 0° moment of the first alternating-current voltage is third duration, and the third duration is positively correlated with the second phase angle; and
duration by which the rising edge moment of the fourth thyristor is later than the phase 180° moment of the first alternating-current voltage is fourth duration, and the fourth duration is positively correlated with the second phase angle.

8. The uninterruptible power supply system according to claim 7, wherein the third duration is equal to the fourth duration.

9. The uninterruptible power supply system according to any one of claims 1 to 5, wherein a phase of the third alternating-current voltage lags behind a phase of the first alternating-current voltage; and
the falling edge moment of the third thyristor is earlier than or equal to the third moment, the falling edge moment of the fourth thyristor is earlier than or equal to the fourth moment, the third moment is a moment at which an instantaneous value of the third alternating-current voltage being less than an instantaneous value of the first alternating-current voltage changes to an instantaneous value of the third alternating-current voltage being greater than an instantaneous value of the first alternating-current voltage, and the fourth moment is a moment at which an instantaneous value of the third alternating-current voltage being greater than an instantaneous value of the first alternating-current voltage changes to an instantaneous value of the third alternating-current voltage being less than an instantaneous value of the first alternating-current voltage.

10. The uninterruptible power supply system according to claim 9, wherein a lagging phase difference between the third alternating-current voltage and the first alternating-current voltage is a third phase angle;
duration by which the falling edge moment of the third thyristor is earlier than the phase 180° moment of the first alternating-current voltage is fifth duration, and the fifth duration is positively correlated with the third phase angle; and
duration by which the falling edge moment of the fourth thyristor is earlier than the phase 360° moment of the first alternating-current voltage is sixth duration, and the sixth duration is positively correlated with the third phase angle.

11. The uninterruptible power supply system according to claim 10, wherein the fifth duration is equal to the sixth duration.
